# EUROPÄISCHE PATENTSCHRIFT

(11) **EP 0 429 030 B1**
(45) Veröffentlichungstag und Bekanntmachung des Hinweises auf die Patenterteilung: **15.06.1994**
(21) Anmeldenummer: 90122012.9
(22) Anmeldetag: 17.11.1990
(51) Int. Cl.: B01L 7/00

(54) **Inkubationseinrichtung für Mikrotitrationsplatten**
Incubator for microtitration plates
Incubateur pour les plaques de microtitration

(30) Priorität: 21.11.1989 DE 3938565
(43) Veröffentlichungstag der Anmeldung: 29.05.1991
(73) Patentinhaber: BEHRINGWERKE Aktiengesellschaft, 35001 Marburg (DE)
(72) Erfinder: Gross, Jürgen, Dr., W-6238 Hofheim am Taunus (DE); Pufahl, Holger, Dr., W-6000 Frankfurt am Main (DE); Schaller, Karl-Heinz, W-6396 Schöneck (DE); Wilmes, Hugo, W-6236 Eschborn (DE); Sänger, Dieter, W-6272 Niedernhausen (DE)

(56) Entgegenhaltungen:
- EP-A- 0 165 172
- WO-A-87/00084
- DE-A- 1 914 585
- PATENT ABSTRACTS OF JAPAN, vol. 8, no. 18 (P-250)[1455], 26. Januar 1984;& JP-A-58 176 551 (TOUKIYOU KURINIKARU RABORATORII K.K.)17-10-1983

## Beschreibung

Die Erfindung betrifft eine Inkubationseinrichtung mit Greifeinrichtung für Mikrotitrationsplatten, die aus einer Heiz- und Inkubationskammer besteht, die durch Ablagen zur Aufnahme der Mikrotitrationsplatten in eine Vielzahl von Gefachen unterteilt ist.

Bei immunologischen Tests, wie z.B. bei Enzyme-Linked-Immuno-Sorbent-Assays (ELISA) sind auf den Gefäßwänden einer Mikrotitrationsplatte Antigene oberflächenfixiert, die mit Inhaltsstoffen einer Patientenprobe reagieren. Die Reaktionen laufen bei bestimmten Temperaturen und Inkubationszeiten ab.

Inkubationseinrichtungen der genannten Art sind aus der DE-A-19 14 585 und der EP-A-0 165 172 bekannt. Diese Inkubationseinrichtungen werden manuell bedient. Sie eignen sich nicht für einen automatischen Betrieb.

Für die Inkubation von Mikrotitrationsplatten soll eine Einrichtung bereit gestellt werden, mit deren Hilfe der Inkubationsvorgang automatisch ablaufen kann.

Die Erfindung löst die Aufgabe durch eine Inkubationseinrichtung, die dadurch gekennzeichnet ist, daß a) die Heizkammer einen regelbaren Heißluftgenerator aufweist, über dem Luftleiteinrichtungen zum Vergleichsmäßigen und Verteilen des Heißluftstromes auf die Mikrotitrationsplatten sowie Luftleiteinrichtungen zum Sammeln und Rückführen der Heißluft zum Heißluftgenerator angeordnet sind und die Heizkammer durch ein Tor verschließbar ist, b) jedes Gefach der Inkubationskammer durch ein Tor verschließbar ist und die Seitenwände der Gefache mit Heizeinrichtungen versehen sind und c) die Inkubationseinrichtung mit einer Greif- und Transporteinrichtung versehen ist, deren Arbeitsbühne vertikal verschiebbar ist und die einen horizontal verschiebbaren Greifarm aufweist.

Die Heizkammer und die Inkubationskammer kann einen Modul bilden, bei dem die Tore für die einzelnen Gefache in einer Front übereinander angeordnet und in seitlichen Führungen geführt sind. Der Modul kann mit einer Vorrichtung zum individuellen Öffnen der Tore versehen sein, die einen vertikal und horizontal beweglichen Greifarm für einen Mitnehmer aufweist, der seitlich am Tor angeordnet ist. Dem Modul kann ein Vorratssilo zugeordnet sein, das eine Eingabeeinrichtung für die Mikrotitrationsplatten aufweist. Die Greif- und Transporteinrichtung kann um ihre vertikale Achse drehbar sein.

Die Vorteile der Inkubationseinrichtung sind im wesentlichen darin zu sehen, daß die Aufheizung der Mikrotitrationsplatten von der eigentlichen Inkubationsphase räumlich getrennt ist, wodurch das Konstanthalten der Temperatur während der Inkubationsphase erleichtert wird. Darüberhinaus kann die Inkubationseinrichtung in automatisch arbeitende Analysengeräte ohne weiteres integriert werden.

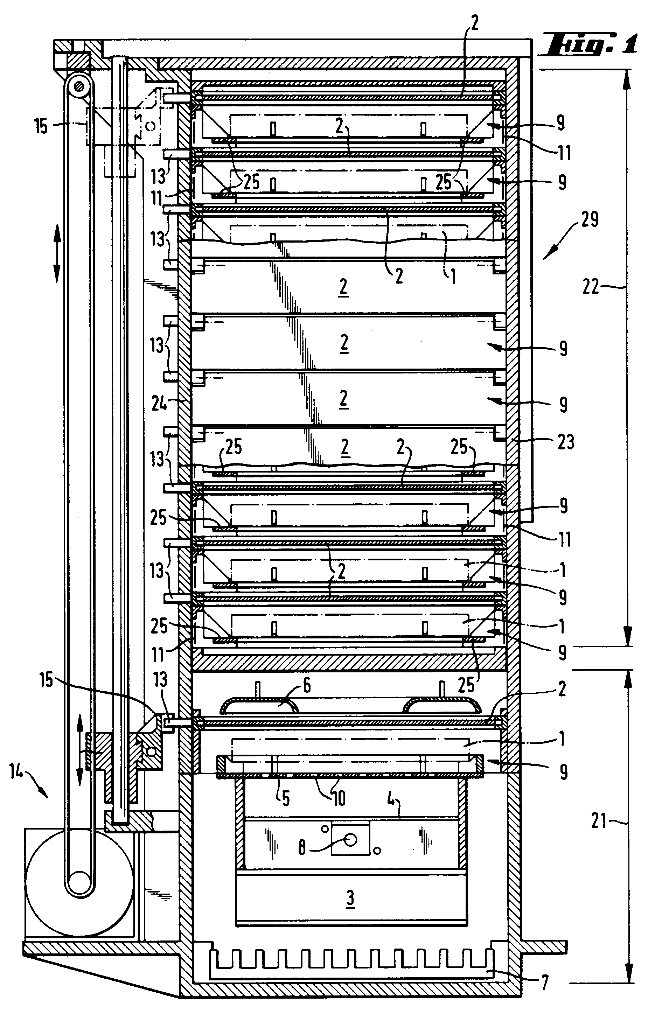

Im folgenden wird die Erfindung anhand von lediglich einen Ausführungsweg zeigenden Zeichnungen näher erläutert. Es zeigen
- Figur 1: eine Ansicht des aus Heizkammer und Inkubationskammer bestehenden Moduls, teilweise geschnitten;

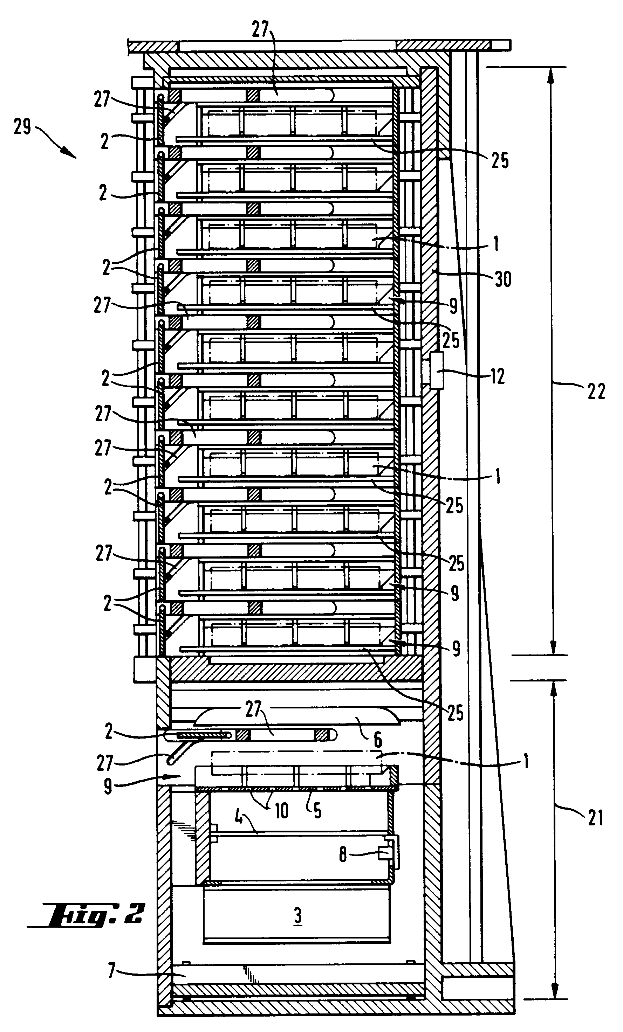

- Figur 2: den Modul gemäß Figur 1 in Seitenansicht, teilweise geschnitten;

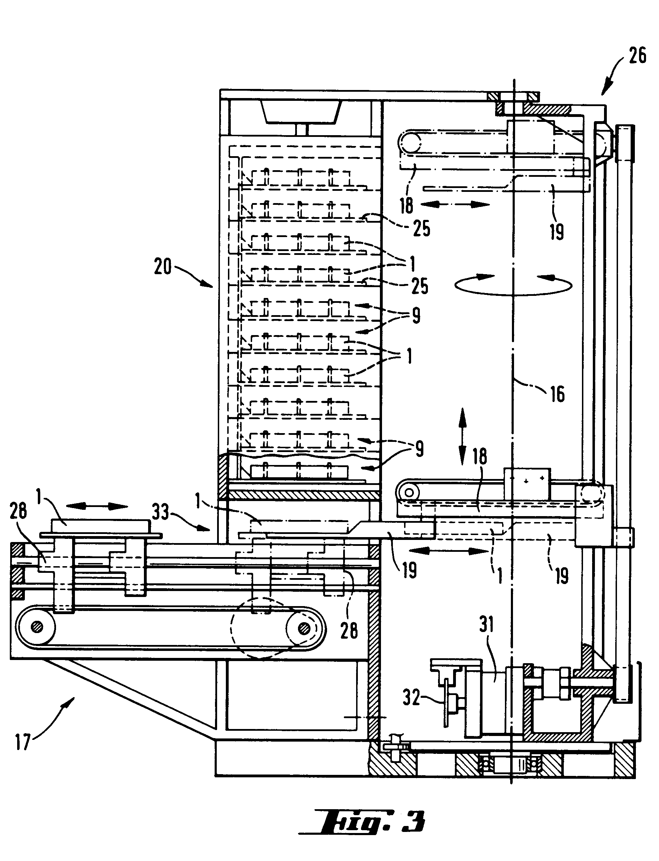

- Figur 3: ein der Inkubationseinrichtung zugeordnetes Vorratssilo in Seitenansicht und

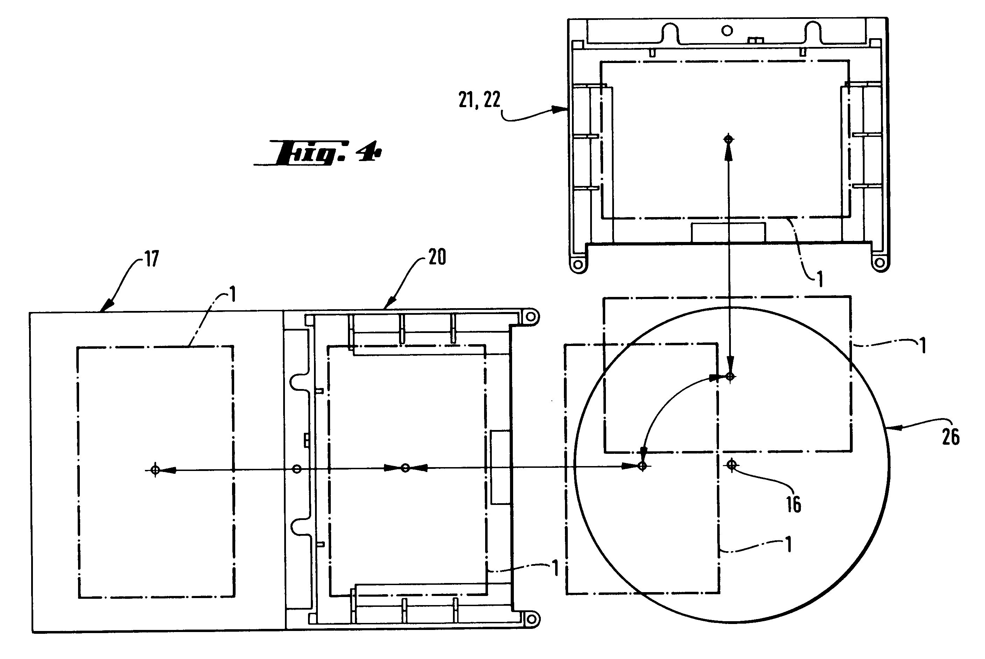

- Figur 4: eine Draufsicht auf die schematisch dargestellte Inkubationseinrichtung.

Die Inkubationseinrichtung besteht aus einer Heizkammer (21), die räumlich getrennt von einer Inkubationskammer (22) angeordnet ist und mit dieser den Modul (29) zum Inkubieren der Mikrotitrationsplatten bildet. In der Heizkammer (21) ist ein Heißluftgenerator bestehend aus Heizelement (7) und Luftumwälzvorrichtung (3) angeordnet. Über dem Generator (3,7) befinden sich Luftleiteinrichtungen (4,5), z.B. Bleche mit Öffnungen (10), zum Vergleichmäßigen und Verteilen des Heißluftstromes auf die Mikrotitrationsplatte (1). Mit den Luftleiteinrichtungen (6) wird die verbrauchte Heißluft gesammelt und zum Heizelement (7) zurückgeführt. Die Heizkammer (21) ist durch ein Tor verschließbar und besitzt einen Temperaturfühler (8) der Teil einer Temperaturregelvorrichtung (nicht dargestellt) ist. Durch geeignete Wahl der für die Regelung erforderlichen Parameter kann die Aufheizzeit der Mikrotitrationsplatte beliebig festgelegt werden. Die Inkubationskammer (22) ist durch Ablagen (25) in eine Vielzahl von Gefachen (9) unterteilt. Die Gefache (9) nehmen die zu inkubierenden Mikrotitrationsplatten (1) auf. Sie sind jeweils durch ein Tor verschließbar. Auf ihren Seitenwänden (23,24) sind Heizeinrichtungen (11) angeordnet. Der Temperaturfühler (12) ist Teil eines Regelkreises (nicht dargestellt), mit dessen Hilfe die Temperatur in der Inkubationskammer (22) konstant gehalten wird.

Die einzelnen Gefache (9) der Heizkammer (21) und der Inkubationskammer (22) besitzen alle gleichartige Tore (2) und den gleichen Öffnungsmechanismus. Zum Betätigen der Tore (2) ist der Modul (29) mit einer Vorrichtung (14) versehen, die einen Greifarm (15) aufweist, der vertikal und horizontal beweglich angeordnet ist. Die Tore (2) sind in seitlichen Führungen (27) geführt, die teilweise schräg und teilweise parallel zu den Ablagen (25) verlaufen. Die Tore weisen Mitnehmer (13) auf, an denen sie durch den Greifarm (15) zum Öffnen in Richtung Rückwand (30) gezogen werden und umgekehrt.

Zum Be- und Entladen der Heizkammer (21) und der Inkubationskammer (22) mit Mikrotitrationsplatten (1) ist die Inkubationseinrichtung mit einer Greif- und Transportvorrichtung (26) versehen, deren Arbeitsbühne (18) vertikal verschiebbar ist und die einen horizontal verschiebbaren Greifarm (19) aufweist. Der Antriebsmotor (31) für die Bewegung der Arbeitsbühne (18) ist mit einer Kennungsscheibe (32) versehen, die Teil der Motorsteuerung (nicht dargestellt) ist. Der Antrieb für den Greifarm (19) kann entsprechend ausgerüstet sein.

Da die in der Heizkammer (21) erwärmten Mikrotitrationsplatten schon die gewünschte Endtemperatur besitzen, wird die Inkubationskammer (22) nicht durch Beladen mit neuen Mikrotitrationsplatten aus dem thermischen Gleichgewicht gebracht.

Dem Modul (29) kann ein Vorratssilo (20) zugeordnet sein. In ihm werden die zu inkubierenden Mikrotitrationsplatten (1) aufbewahrt. Das Silo (20) besitzt zweckmäßig ebenso viele Gefache wie die Inkubationskammer (22). Es weist ferner eine Übergabestation (33) auf, die mit einer Eingabeeinrichtung (17) versehen ist. Die Mikrotitrationsplatten (1) werden auf dem Schlitten (28) der Eingabeeinrichtung (17) abgelegt und in die Übergabestation (33) gefahren. Hier werden die Mikrotitrationsplatten (1) durch die Greif- und Transporteinrichtung (26), die um die Achse (16) drehbar angeordnet sein kann, entnommen und in die Gefache des Silos (20) abgelegt. Von dort gelangen sie in die Heizkammer (21) und schließlich in die Inkubationskammer (22). Durch eine geeignete Steuereinrichtung lassen sich mit der Inkubationseinrichtung auch Inkubationen durchführen, die durch Waschvorgänge und/oder Reagenzienzugabe unterbrochen werden müssen.

## Patentansprüche

1. Inkubationseinrichtung mit Greifeinrichtung für Mikrotitrationsplatten bestehend aus einer Heiz- und Inkubationskammer, die durch Ablagen zur Aufnahme der Mikrotritrationsplatten in eine Vielzahl von Gefachen unterteilt ist, dadurch gekennzeichnet, daß
a) die Heizkammer (21) einen regelbaren Heißluftgenerator (3,7) aufweist, über dem Luftleiteinrichtungen (4,5) zum vergleichmäßigen und Verteilen des Heißluftstromes auf die Mikrotitrationsplatten (1) sowie Luftleiteinrichtungen (6) zum Sammeln und Rückführen der Heißluft zum Heißluftgenerator (3,7) angeordnet sind und die Heizkammer durch ein Tor (2) verschließbar ist,
b) jedes Gefach (9) der Inkubationskammer (22) durch ein Tor (2) verschließbar ist und die Seitenwände (23) der Gefache (9) mit Heizeinrichtungen (11) versehen sind und
c) die Inkubationseinrichtung mit einer Greif- und Transporteinrichtung (26) versehen ist, deren Arbeitsbühne (18) vertikal verschiebbar ist und die einen horizontal verschiebbaren Greifarm (19) aufweist.

2. Inkubationseinrichtung nach Anspruch 1, dadurch gekennzeichnet, daß die Heizkammer (21) und die Inkubationskammer (22) einen Modul (29) bilden, bei dem die Tore (2) für die einzelnen Gefache (9) in einer Front übereinander angeordnet und in seitlichen Führungen (27) geführt sind.

3. Inkubationseinrichtung nach Anspruch 2, dadurch gekennzeichnet, daß der Modul (29) mit einer Vorrichtung (14) zur individuellen Öffnen der Tore (2) versehen ist, die einen vertikal und horizontal beweglichen Greifarm (15) für einen Mitnehmer (13) aufweist, der seitlich am Tor (2) angeordnet ist.

4. Inkubationseinrichtung nach Anspruch 2, dadurch gekennzeichnet, daß dem Modul (29) ein Vorratssilo (20) zugeordnet ist, das eine Eingabeinrichtung (17) für die Mikrotitrationsplatten (1) aufweist.

5. Inkubationseinrichtung nach Anspruch 1, dadurch gekennzeichnet, daß
a) die Heizkammer (21) und die Inkubationskammer (22) einen Modul (29) bilden, bei dem die Tore (2) für die einzelnen Gefache (9) in einer Front übereinander angeordnet sind und in seitlichen Führungen (27) geführt werden,.
b) der Modul (29) mit einer Vorrichtung (14) zum individuellen Öffnen und Schließen der Tore (2) versehen ist,
c) dem Modul (29) ein Vorratssilo (20) zugeordnet ist, das eine Eingabeeinrichtung (17) für die Mikrotitrationsplatten (1) aufweist und
d) die Greif- und Transporteinrichtung (26) um ihre vertikale Achse (16) drehbar angeordnet ist.

## Claims

1. An incubation device having a gripper device, for microtiter plates, comprising a heating and incubation chamber which is divided into a plurality of compartments by shelves for receiving the microtitor plates, wherein
a) the heating chamber (21) has a controllable hot-air generator (3,7) over which are arranged air-guide devices (4,5) for the equalization and distribution of the stream of hot air to the microtiter plates (1), as well as air-guide devices (6) for the collection and return of the hot air to the hot-air generator (3,7), and the heating chamber can be closed by a gate (2),
b) can be closed each compartment (9) of the incubation chamber (22) by a gate (2), and the side walls (23) of the compartments (9) are provided with heating devices (11), and
c) the incubation device is provided with a gripping and transporting device (26) whose working platform (18) is vertically displaceable and which has a horizontally displaceable gripping arm (19).

2. An incubation device as claimed in claim 1, wherein the heating chamber (21) and the incubation chamber (22) form a module (29) in which the gates (2) for the individual compartments (9) are arranged one above the other in a front section and are carried in lateral guides (27).

3. An incubation device as claimed in claim 2, wherein the module (29) is provided with an arrangement (14) for individual opening of the gates (2), which arrangement has a vertically and horizontally movable gripping arm (15) for a catch (13) which is arranged laterally on the gate (2).

4. An incubation device as claimed in claim 1, wherein a storage hopper (20) is assigned to the module (29) and has a feed device (17) for the microtiter plates (1).

5. An incubation device as claimed in claim 1, wherein
a) the heating chamber (21) and the incubation chamber (22) form a module (29) in which the gates (2) for the individual compartments (9) are arranged one above the other in a front section and are carried in lateral guides (27),
b) the module (29) is provided with an arrangement (14) for individual opening and closing of the gates (2),
c) a storage hopper (20) is assigned to the module (29) and has a feed device (17) for the microtiter plates (1), and
d) the gripping and transporting device (26) is arranged to be rotatable about its vertical axis (16).

## Revendications

1. Appareil d'incubation, comprenant un dispositif de préhension de plaques de microtitration et constitué d'une chambre de chauffage et d'incubation qui est divisée en de multiples compartiments au moyen d'éléments récepteurs destinés à recevoir les plaques de microtitration, caractérisé en ce que :
a) la chambre de chauffage (21) comprend un générateur d'air chaud (3, 7) réglable au-dessus duquel sont disposés des moyens de guidage d'air (4, 5) servant à uniformiser et répartir le flux d'air chaud sur les plaques de microtitration (1), ainsi que des moyens de guidage d'air (6) servant à recueillir et renvoyer l'air chaud vers le générateur d'air chaud (3, 7), la chambre de chauffage étant agencée de façon à pouvoir être fermée au moyen d'une porte (2),
b) chaque compartiment (9) de la chambre d'incubation (22) est agencé de façon à pouvoir être fermé au moyen d'une porte (2) et les parois latérales (23) des compartiments (9) sont pourvues de moyens de chauffage (11) et
c) l'appareil d'incubation est pourvu d'un dispositif de préhension et de transport (26) dont une plateforme de travail (18) est agencée de façon à pouvoir être déplacée en translation verticale et qui comprend un bras de préhension (19) agencé de façon à pouvoir être déplacé en translation horizontale.

2. Appareil d'incubation suivant la revendication 1, caractérisé en ce que la chambre de chauffage (21) et la chambre d'incubation (22) constituent un module (29) dans lequel les portes (2) correspondant aux différents compartiments (9) sont disposées l'une au-dessus de l'autre en façade et sont guidées dans des glissières latérales (27).

3. Appareil d'incubation suivant la revendication 2, caractérisé en ce que le module (29) est pourvu d'un dispositif (14) d'ouverture individuelle des portes (2) qui comprend un bras de préhension (15) qui est mobile verticalement et horizontalement et sert à saisir un entraîneur (13) qui est disposé latéralement sur la porte (2).

4. Appareil d'incubation suivant la revendication 2, caractérisé en ce qu'il est associé au module (29) un silo de stockage (20) qui comprend un dispositif (17) d'introduction des plaques de microtitration (1).

5. Appareil d'incubation suivant la revendication 1, caractérisé en ce que :
a) la chambre de chauffage (21) et la chambre d'incubation (22) constituent un module (29) dans lequel les portes (2) correspondant aux différents compartiments (9) sont disposées l'une au-dessus de l'autre en façade et sont guidées dans des glissières latérales (27).
b) le module (29) est pourvu d'un dispositif (14) permettant une ouverture et une fermeture individuelles des portes (2),
c) il est associé au module (29) un silo de stockage (20) qui comprend un dispositif (17) d'introduction des plaques de microtitration (1) et
d) le dispositif de préhension et de transport (26) est disposé de façon à pouvoir tourner autour de son axe vertical (16).
